# EUROPEAN PATENT SPECIFICATION

(11) **EP 1 775 246 B1**
(45) Date of publication and mention of the grant of the patent: **28.09.2011**
(21) Application number: 06255129.6
(22) Date of filing: 04.10.2006
(51) Int. Cl.: B65G 69/24

(54) **Modular lifting means**
Modulare Hebevorrichtung
Moyens de levage modulaires

(30) Priority: 13.10.2005 GB 0520788; 09.05.2006 GB 0609105
(43) Date of publication of application: 18.04.2007
(73) Proprietor: Adams, William Mark, Retford, Nottinghamshire DN22 8PT (GB)
(72) Inventor: Adams, William Mark, Retford, Nottinghamshire DN22 8PT (GB)
(74) Representative: Wood, Graham

(56) References cited:
- WO-A-93/18992
- DE-U1- 9 402 749
- GB-A- 2 268 467

## Description

The invention to which this application relates is a modular lifting means of a type which can be utilised to allow the loading and unloading of goods to and from a goods storage area or between good storage areas such as the goods storage areas in the form of a vehicle and a warehouse.

The transport of goods between geographical locations via road or rail transport is well known, with the goods being transported in goods storage areas, either in the form of fixed bodies on vehicles, or trailers which are towed as part of the vehicle. A common problem with the movement of the goods is how best to load and unload the same into and from the goods storage area, with the loading and unloading typically taking place through an opening at the rear and/or side of the goods storage area. The floor of the good storage area is typically raised above the ground on wheels at the time of loading and unloading and during transport and, as a result, it is known to provide loading bays which have a fixed floor at a particular height and/or are provided with lifting means fixed permanently at and integrally with the loading bay.

With fixed height loading bays, problems are often experienced in that the level of the floor of the storage area does not meet with the level of the loading bay and, with the increasing use of transportable goods storage areas which incorporate two floor levels, one spaced above the other, then there is a problem in accessing the goods which are on the upper floor level of the goods storage area of the vehicle.

This has conventionally overcome by providing one of the floors to be movable and/or by providing tail lift apparatus on the goods storage area of the vehicle. However not all vehicles which visit the warehouse are fitted with the same therefore the problem will still arise from time to time or, more commonly, where the loading bays are used frequently, the warehouse operator has to incur the cost of installing fixed lifting means at the loading bay so as to allow a platform provided on the lifting means to be moved between the required heights to allow loading and unloading of goods to and from the goods storage area floors.

Problems with providing fixed lifting means include, the cost of providing the same, as the apparatus is typically provided in the form of a platform which is positioned above scissor lifting members and, in order to allow the platform to be moved to the lowest point and allow the passage of goods and/or trolleys carrying the goods there-across, the scissor lifting members under the platform are required to be positioned in a pit or recess which is below the level of the ground on which the vehicle is supported. This requires excavation work to be performed prior to the apparatus being installed as an integral part of the loading bay structure. This also means that if the apparatus breaks down once installed then extensive removal and repair work is required to be undertaken and the loading bay is rendered inoperable. Thus, to the operator of the apparatus, there is provided a significant expense in incorporating the lifting apparatus within their warehouse infrastructure and thereafter, a significant risk of substantial further expenditure and costs if the apparatus breaks down.

A further problem with this type of fitted lifting apparatus is that the same is relatively inflexible and therefore cannot be easily adapted to suit particular goods movement requirements. Furthermore, as the platform is provided in connection with scissor lifting members, the area under the platform is taken up by the mechanical scissor assembly which can restrict the possibility of the platform being used with certain goods storage areas such as those which incorporate tail lifts.

Document GB2268467 illustrates an example of a fitted lifting apparatus which, if installed for use externally, would need to be surrounded by an enclosure to protect the same, the goods and the operators using the same. This adds to the time and expense of installation.

In those circumstances where the goods storage areas incorporate two floors provided in the transportable storage area it is known to provide one of the floors to be powered for movement but the additional apparatus required to allow this to happen is expensive, can be damaged and adds significant weight to the vehicle which results in increased fuel costs and other charges. Furthermore, even with a movable floor, the extent of movement is limited which means that the level of the floor of the other goods storage area has to be within a certain range which often is not the case.

The aim of the present invention is to provide lifting means which can be used and formed to allow the movement of goods between goods storage area, with the lifting means provided in a manner which allows the same to be used efficiently and effectively and to allow the lifting means to be provided in a manner which reduces the cost of installation and also provides advantages in replacement of the same should there be a malfunction.

In a first aspect of the invention, there is provided lifting apparatus for the movement of goods between a first, vehicle goods storage area, said goods storage area having an opening and at least one floor, and a second goods storage area having an opening and at least one floor, and a gap between said first and second areas, said apparatus provided in said gap, and said lifting apparatus having a frame and a platform which is selectively movable at least in a vertical plane with respect to the frame so as to be able to lie at least in line with the level of said floors of the goods storage areas, said frame placed in position in said gap with the base of the frame in contact with a support surface, characterised in that said apparatus is formed with the frame in the form of a body module and a roof module, said modules assembled with the platform and drive means under factory conditions and delivered to the site for use at which the body and roof modules are connected to form .the lifting apparatus.

In one embodiment, the support surface with which the base is in contact, is at the same level as the ground surface on which the wheels of the vehicle goods storage area are in contact.

In another embodiment, the base of the frame of the lifting means is in contact with a ground surface at the same level as the floor level of the second storage area.

In one embodiment, the vehicle goods storage area has first and second floors which are vertically spaced and the platform of the lifting means is movable so as to be selectively positioned in line with said first or second floor. In accordance with the invention the multiple floors can be fixed rather than movable which reduces the cost and weight of the transportable goods storage area.

In one embodiment, the lifting means incorporates any or any combination of buffers, sealing means and/or visual and/or audible indicators. Typically said additional components can be fitted to the lifting apparatus upon arrival at the point of use. Additionally cladding or other protective means may also be attached at this stage. In one embodiment the apparatus is placed on and secured to mounting pads on the ground surface and/or may be attached to a goods storage area.

In one embodiment, the platform of the apparatus is movable in the vertical plane under the influence of a plurality of one or more hydraulic rams. In one embodiment the hydraulic rams are mounted in the frame, in a vertical plane within one or more side walls or, in another embodiment, in a horizontal plane, preferably at the top of the frame, thereby leaving the underside of the platform available as free space for movement of the platform.

In one embodiment, the opening of the vehicle goods storage area incorporates a platform which depends outwardly from the opening and, if extended, it will therefore be appreciated that the gap which is filled by the lifting means apparatus extends from the edge of the vehicle fitted platform to the second storage area such as a warehouse or loading bay.

In one embodiment, the opening in the second goods storage area may be spaced back from the edge of the floor which forms a loading bay and the gap in this case is defined as the edge of the loading bay to the opening of the first goods storage area or edge of an extended platform of the said goods storage area.

In one embodiment the platform of the lifting apparatus is capable of receiving 24 or more goods carrying cages thereon.

In a further aspect of the invention there is provided a method for providing a lifting means apparatus for use in conjunction with a first vehicle storage area and a second goods storage area in the form of a warehouse and to allow movement of goods between the same, said lifting means incorporating a frame, a platform movable along a vertical axis with respect to said frame, said frame provided with a base to be mounted on a support surface at the location of use and positioned between the warehouse on a first side and the location for the vehicle goods storage area on an opposing side characterised in that the frame is in the form of a body module and roof module, said modules assembled under factory conditions with the platform and drive means and delivered for use on site and connected to form the lifting apparatus.

Typically said modular lifting apparatus is moved into position such that the base contacts with a support surface to locate the lifting means.

Typically the method includes the step of ensuring that the platform is movable between the levels of all of the floors of the goods storage areas which can be brought into position at the gap in which the lifting apparatus is located.

Typically those faces of the frame which are not located adjacent to the warehouse or vehicle good storage area openings are provided with a screen or barrier.

In one embodiment, the platform is angularly movable from a substantially horizontal plane so as to allow a ramp to be formed between a floor level of the first goods storage area and a floor level of the second goods storage area.

In a further embodiment of the invention the lifting means includes a buffer assembly, which buffer assembly is provided to at least partially absorb any impact which would normally occur between the lifting means and the fixed loading bay structure and/or with the vehicle goods storage area which may occur due to the movement of the vehicle goods storage area into position at the opposing side of the lifting means. Commonly, when a vehicle is being reversed into position, the driver is not able to view the lifting means and therefore there is, inevitably, from time to time, impact onto the lifting apparatus. The provision of the buffer will allow such impact to be without causing undue damage to the lifting apparatus.

In one embodiment the lifting apparatus can include cladding or other masking means once located in position. This can be used to give the appearance that the apparatus is part of the warehouse and in whichever embodiment hydraulic rams are provided within the frame of the apparatus.

In one embodiment, the lifting means is provided with rollers and possibly also a track along which the rollers can move, said rollers being provided to allow limited movement of the lifting apparatus with regard to the buffer assembly, if provided.

In a further embodiment of the invention there is provided an extendable ramp section, provided for use at an edge of the platform provided on the lifting apparatus, said platform having a pivotally movable section which can be moved between a raised position and a lowered position in which the same extends downwardly from the platform towards a supporting surface so as to provide a ramp along which goods, and in particular goods provided in trolleys or roll cages, can be moved. On occasion, the ramp can be too steep to allow the movement of trolleys along the same and, as a result, it can be difficult to load and unload trolleys or other wheeled goods movement apparatus onto and from the platform. In accordance with this embodiment of the invention, there is provided a ramp portion onto which the said movable portion of the platform fits, said ramp serving to support the movable portion of the platform and, furthermore, hold that portion at a less steep angle and typically one which substantially matches an angle of the remainder of the extended ramp section, thereby providing a less steep angled ramp along which the goods movement trolleys or other wheeled apparatus is required to be moved.

In one embodiment the apparatus includes an obstructing member arranged such that, when the platform is positioned at a first height, the obstructing member obstructs access to the platform from a second operating height.

In one embodiment the platform has a first side and a second side arranged such that the first edge of the platform extends across the first side and the second platform edge extends across the second side. In one embodiment each platform edge can be raised and lowered relative to each respective side.

Advantageously access to the platform from an adjacent operating surface or floor which is not at the same height as the platform, is obstructed in order to ensure that entrance to and exit from a side of the platform is only possible at one or more predetermined heights. A user can thus enter from one side of the platform at one operating height, level with an operating surface or floor of a first goods storage area then raise or lower the platform for exit from a different side when the platform is at a second operating height, level with a operating surface or floor of a second goods storage area.

In one embodiment, the obstructing member is fixed at a predetermined distance from the platform and movable therewith. Preferably the obstructing member is disposed above the platform and arranged in a generally parallel orientation to the platform. According to one particular embodiment, the distance between the platform and the obstructing member is greater than the distance between the first and second operating heights.

According to such an arrangement, the obstructing member advantageously extends above the higher floor or surface when the platform is in a lowered position and thus prevents anyone at the higher level from incorrectly entering the platform.

According to a preferred embodiment, the obstructing member is held in position relative to the platform by at least one supporting arm extending substantially at right angles from the platform. Preferably the at least one supporting arm extends from one edge of the platform and in one particular embodiment a further supporting arm is spaced from the first supporting arm and connected thereto by the obstructing member so as to form a frame along the one edge of the platform. Preferably still, the platform is substantially rectangular and a supporting arm is provided at each corner of the platform, connected to a supporting arm at each adjacent corner by an obstructing member so as to form a frame extending above each edge of the platform.

A frame extending from a rectangular platform provides an obstruction to anyone trying to enter the platform from an adjacent operational surface above the level of the platform regardless of the orientation of the platform.

In an alternative embodiment, the obstructing member is movable relative to the platform. Preferably the raising or lowering of the platform causes a reciprocal movement of the obstructing member. In one embodiment, the movement of the obstructing member is in an opposite direction to the movement of the platform. The platform and obstructing member may be connected by a pulley system.

The apparatus preferably includes a base portion disposed beneath the platform such that the platform can be raised and lowered relative to the base portion. According to one embodiment, the base portion is disposed on a supporting surface. The supporting surface may be disposed at either of the first or second operating height, or else the supporting surface may be disposed below the first and second operating heights. An underside of the base may be substantially flat so as to sit substantially flush with the surface upon which it is positioned, or else the base may be raised slightly by the provision of at least one fixed member between the base and the supporting surface, or else by wheels interposed between the base and the supporting surface.

According to one embodiment, any wheels which are provided can be selectively provided on the ground to allow the apparatus to be moved therealong. In one embodiment the same are lockable, or the wheels may be removable by a release means, or else the wheels may be retractable. In a preferred embodiment, the wheels are mounted on one or more retractable members which extend from a portion of the lifting apparatus and are movable relative thereto such that the wheels can be moved between a supporting position, wherein the wheels bear the weight of the lifting apparatus, and a retracted position, wherein the wheels are removed from the force path between the lifting apparatus and the supporting surface. The wheels may be retractable by way of a piston and cylinder arrangement mounted on the loading apparatus. Two or more mounting members may be connected by an arm in order to ensure that the wheels are raised and lowered in unison.

According to one embodiment, the base portion comprises apertures for the reception of fork lift arms or else is raised to allow fork lift arms to extend beneath the base.

Advantageously the apparatus may be lifted by a fork lift and moved into a position for use such as at the opening to a container and set down.

According to one embodiment, the platform has an extendable portion which is selectively extendable from the platform during operation. The extendable portion can be extendable from either of the first or second edge of the platform so as to provide additional platform area during use such as, for example, to reach into a floor of a goods storage area. In a preferred embodiment, the extendable portion automatically extends from the platform at a predetermined height. In one embodiment, the predetermined height is set by an operator to coincide with the first or second operating height.

The provision of an extending platform is beneficial in that it allows any gap between the deck and an adjacent goods storage area to be spanned, providing a continuous walkway onto the platform.

In one embodiment, the extendable portion is slidable or rotatable relative to the platform by way of rollers. Preferably an extendable portion is provided at each edge of the platform, such that one portion can extend from the first edge and a second portion can extend from the second edge.

In one embodiment the frame includes drive means to drive the movement of said platform said drive means including a hydraulic ram acting on one or more flexible members connected to the platform and influenced by movement of the ram to in turn cause movement of the platform with respect to the frame.

In one embodiment, two hydraulic rams are provided.

In one embodiment the hydraulic rams are mounted on a side face of the frame and typically respective rams are mounted on opposing faces of the frame.

In an alternative embodiment, the hydraulic rams are mounted in a plane parallel with the plane of the platform and perpendicular to the direction of movement of the platform. In one embodiment the rams are located at the top of the frame.

In one embodiment, the hydraulic rams are mounted so as to lie substantially flush with the inner surfaces of the side walls of the frame so as not to reduce the size of the platform. The movement of the rams can be independently powered but synchronised using a computer control system. In one embodiment multistage rams can be used, which may allow alteration of the plane of the platform if required.

In one embodiment, the platform has a plurality of guide means, each of said guide means mounted for movement along matching guide means located on the frame and said guide means are mounted in a substantially vertical axis. Typically the guide means are spaced apart around the periphery of the platform and, in one embodiment, a guide means can be provided at each corner of the platform.

The movements of the guide means on the platform with respect to the guide means on the frame, is achieved via the flexible members typically in the form of cable or chain connections, between the hydraulic ram and the platform. The cable or chain connections, are moved as a result of movement of the at least one ram such that, in one embodiment, if the ram is moved to a fully extended position, then the platform will sit at its lowest position and if the ram is retracted, the platform is caused to move to its highest position as a result of the movement of the connections between the ram and the platform. The movement is in turn guided by the location of the guide means on the platform with the guide means of the frame.

In one embodiment, the platform includes attachment plates which can be moved between extended and retracted positions. When in an extended condition, the plates lie outwith the envelope of the frame so as to extend the platform and allow the same to be joined to adjacent surfaces and, for example, form a ramp.

In one embodiment, the connection between the hydraulic ram, the flexible members and the platform, allow an increased lift ratio, such as for example 2:1, between the movement of the hydraulic ram and the resulting movement of the platform. It will be appreciated that the ratio is selected to suit particular platform movement requirements. Also, because the rams are mounted on the side walls, or the top of the frame, there is no restriction on the heights to which the platform can be moved and therefore the platform can be moved from a position substantially adjacent the surface on which the apparatus is mounted to a position substantially at the top height of the frame.

Furthermore, the provision of only two rams and the fact that the same are not mounted at the corners of the apparatus, means that the apparatus can be relatively light and need not be as bulky as conventional apparatus.

In one embodiment, the side walls and/or roof of the frame are enclosed so as to provide protection from inclement weather conditions.

In one embodiment, the power supply for operation of the rams, is mounted on a side wall of the frame.

In one embodiment, barriers are provided along the sides of the apparatus which lie intermediate the entry and exit apertures on the apparatus so as to protect the apparatus from impact from, for example, vehicles. In one embodiment, at the free end of the barriers towards which vehicles are moved, buffers can be provided.

In one embodiment, the platform can move beyond the end of the guide means provided on the frame as the guide means on the platforms are of a length to allow the same to extend beyond the guide means on the frame and still have a portion lying in a guided position.

Typically, upon failure of a power supply or the flexible members, safety means are provided to prevent further movement of the platform until the failure is rectified.

A further improvement of the present apparatus is that because the apparatus is efficient to use and economical to buy, the floors which are provided within a goods storage area in the form of a multi-floor trailer need not themselves be movable. This in turn means that the floors in the trailer can be provided at fixed locations to provide the required goods storage capacity. However, as the lifting apparatus in accordance with the invention can be used at the opening into the trailer and the platform moved to the levels of the floors of the storage area to access the same then no movement of the floors within the trailer is required. This therefore greatly reduces the cost of the trailers and also the weight of the same as no movement apparatus is required to be installed within the same. This reduces the initial cost and the ongoing transport costs. The apparatus can also fit relatively closely around the opening into the goods storage area in the form of a warehouse which means that adjacent openings need not be restricted by the presence of the apparatus. Furthermore, in one embodiment a series of openings may be services by the common lifting apparatus thereby allowing further movement of the goods into the warehouse and avoiding a well known bottleneck area.

The apparatus as described herein can be provided to be manufactured to any one of a range of sizes to accommodate goods movement requirements at particular locations. Typically, the same includes a platform which is movable in a vertical plane and, in one embodiment, the platform may also be tiltable with respect to the horizontal plane. The movement of the platform is provided to allow the marrying or matching of the platform at a height of a trailer and/or for example loading dock and movement between said levels so as to allow goods loaded on the platform, to be moved to a required height for subsequent movement off or on to the platform.

The apparatus has the advantage over conventional systems in that the apparatus is modular and can be provided on site with a minimum requirement for ground works or other construction work to be undertaken. The apparatus is also relatively light and as a result significantly more economical than conventional systems while, at the same time, ensuring that efficient movement of goods can be achieved. Furthermore, the platform of the apparatus can be moved within a relatively large height range such as, for example, to a sufficiently low height so that the goods can be moved to and from the ground on a support surface on which the apparatus is placed and to a sufficiently high height so as to allow goods to be accessible on the raised floor of a goods storage trailer without having to move the floor of the trailer.

Specific embodiments of the invention are now described with reference to the accompanying drawings; wherein
Figures 1a - c illustrate apparatus in elevation in accordance with the first embodiment of the invention in various positions of use;
Figure 2a and b illustrate alternative embodiments of the apparatus of the invention in elevation;
Figure 3 illustrates the modular nature of the apparatus in accordance with the invention;
Figures 4a and b illustrate an elevation of a further embodiment of the invention;
Figures 5a - c illustrate a further feature of the invention;
Figure 6 is an end view of lifting apparatus according to a further aspect of the present invention;
Figures 7A and 7B show side views of an apparatus according to a further embodiment of the invention in raised and lowered positions adjacent a fixed dock;
Figures 7C and 7D show perspective views of a further embodiment of the invention in raised and lowered positions;
Figure 8A is an end view of an apparatus according to an embodiment of the present invention adjacent a fixed dock and with the platform extending into a van for loading;
Figure 8B is a perspective view of an apparatus according to an embodiment of the present invention adjacent a lorry for loading.
Figures 9a to d illustrate various embodiments of apparatus in accordance with the invention; and
Figure 10 illustrates another apparatus in accordance with one embodiment of the invention.

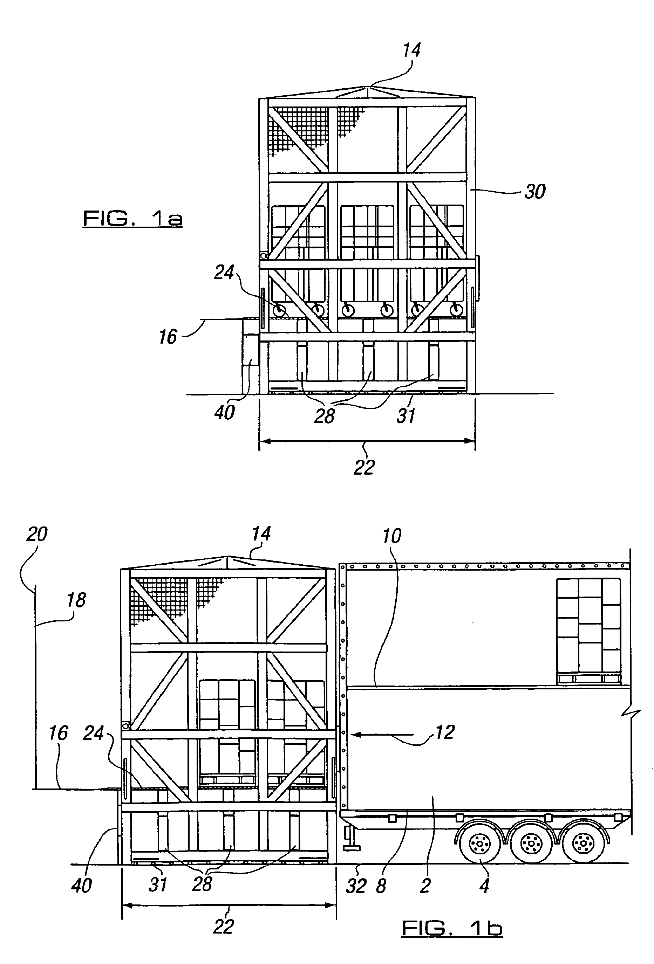

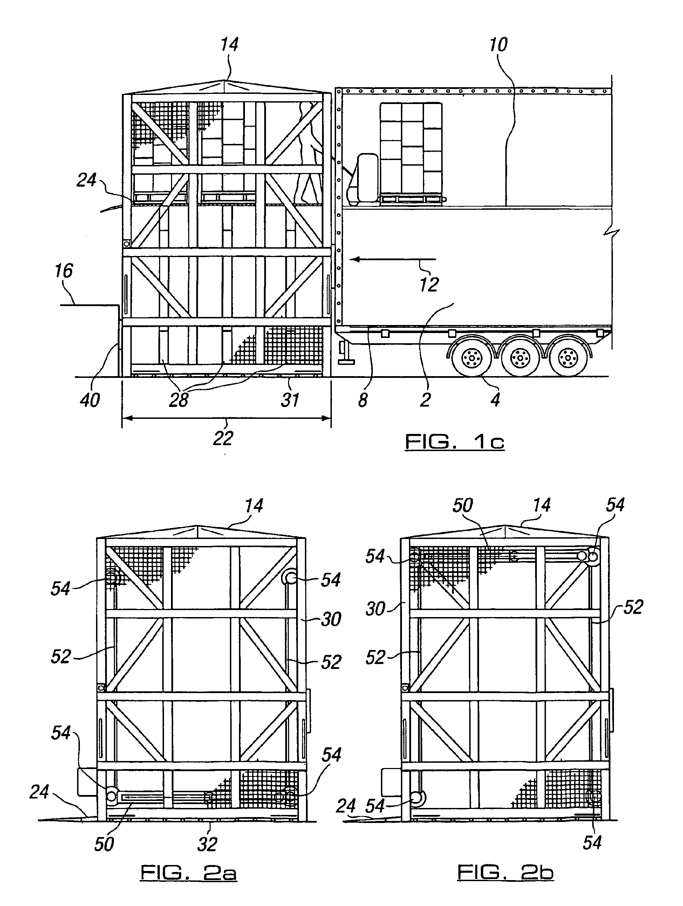

Referring firstly to Figures 1a - c there is illustrated apparatus in accordance with a first embodiment of the invention. The Figures 1b and c show a first goods storage area 2 for a vehicle 4 which has an opening 6 through which goods can be moved into and from the goods storage area 2. In this particular embodiment, the goods storage area 2 has a first floor 8 and a second raised floor 10 and goods can be stored on both of said floors. The vehicle is shown having been reversed in a direction 12 to abut against an edge of lifting apparatus 14 which will be described in more detail subsequently. At the opposing edge of the lifting apparatus, there is provided a second goods storage area including a loading bay 16 leading into an opening 18 in a warehouse 20 and goods can be moved to and from the said warehouse 20 through the opening 18.

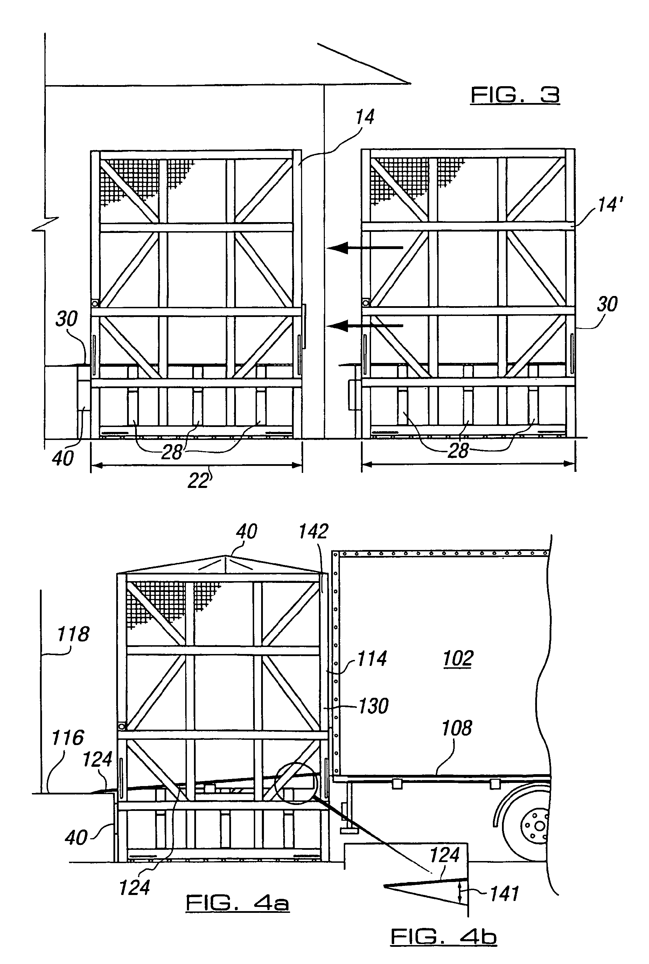

The lifting means 14 is located within a gap 22 between the warehouse and goods storage area 2 and is provided to be located for use in said gap. The lifting means 14 is provided as a modular unit which is meant that the same is fabricated under factory conditions as one or a plurality of modules and then transported and placed into position in the gap 22 as will be shown in Figure 3. The lifting means includes a platform 24 which is movable in a vertical direction as is illustrated with regard to Figures 1a and b where the platform 24 is in line with the floor 16 and in Figure 1c, is in line with the floor 10 of the goods storage area 2 having been moved upwardly.

Figure 1a illustrates how the platform can be used, in this embodiment, to support a number of goods handling cages 26 which include goods stacked thereon. Figures 1b and c show the platform with palleted goods placed thereon.

Once the platform is full of goods to be loaded/unloaded, the platform can be moved to the level either of the floors 8, 10 of the vehicle storage area or floor 16 of the loading bay so as to allow the goods to be moved from the platform and onto or off at the required floor level. The platform 24 is moved vertically under the influence of hydraulic rams 28 which in the embodiments of Figures 1a - c lie in a vertical plane in the side walls of the frame and within the gap 22. The hydraulic rams 28 are supported on the frame 30 of the lifting means and therefore the lifting means is a self contained unit and does not need to be fitted or otherwise engaged with the structure of the warehouse. Equally, no excavation work is required to accommodate the lifting means 14 as the same is supported, at its base, on the same support surface 32 on which the vehicle 4 wheels contact.

By providing the lifting means 14 as a modular unit, so the same can be simply placed into position in the gap 22. Figure 3 shows a lifting means 14' which has been factory assembled and which can be moved into the gap 22 to the position 14 once transported on site. Equally, if there is a malfunction in the apparatus, the lifting means 14 can be simply lifted from the gap 22 and removed to be repaired at a location remote from the gap 22 and can be replaced with another modular lifting unit 14 thereby allowing a lifting means 14 to be available for use at all times and hence minimising downtime to the goods handler.

In one embodiment, as illustrated in Figures 1a - c the apparatus further comprises buffers 40 which can be located on either, or both, of the lifting means 14 and the vertical edge of loading bay 16. Also, rollers 31 can be provided at the base of the lifting means frame 30 and the rollers can be provided in tracks (not shown) such that, if for example, the vehicle 4 is reversed in the direction of the arrow 12 to contact the edge of the lifting means and then the vehicle continues to move in reverse, the lifting means can be moved via the rollers along tracks onto the buffers 40 and the buffers will accommodate a degree of movement as shown in Figures 1b and c where the buffers are compressed. The buffers will also provide a certain resistance to movement to the extent that the vehicle driver will realise that they are in contact with the lifting means 14 and stop the reverse movement of the vehicle. The provision of the buffers (and rollers if provided) will ensure that the lifting means are not damaged and furthermore that the loading bay itself is not structurally affected by the application of a reverse force onto the lifting means.

Figures 4a and b illustrate a further embodiment of the invention in which there is provided a further arrangement of fixed position modular lifting means 114 which again incorporates a frame 130 supporting a platform 124. Also shown in this embodiment, are guide lights 142 which can be operated to indicate to a driver reversing a vehicle towards the lifting means, whether they should proceed or not, i.e if the red light is indicated then they should not reverse the vehicle or indeed move the vehicle and if a green light is indicated then they are free to move the vehicle with respect to the lifting means. These lights 142 can also be incorporated in any of the embodiments as required.

In this case, the platform 124, is provided to be vertically movable but also is provided to be movable between a substantially horizontal position and an angled position as shown in the Figure 4a and b. This is to allow a "bridge" to be provided between the level of the floor 108 of a vehicle goods storage area 102 and the level of the floor 116 of a loading bay 118 and, if the difference in levels is not too great, then the provision of the angled floor allows a constant passage between the loading bay and the vehicle goods storage area floors thereby allowing the constant flow of goods between the same without the need for the platform to be raised or lowered. The degree 141 of movement is selected to suit the floor heights difference as indicted in the Figure 4b which shows the angular adjustment in more detail.

Once again, the apparatus is provided as a modular unit and therefore allows the same to be fitted in position, once the same has been constructed under factory conditions.

Figures 2a and b illustrate a variation in the embodiments of Figures 1a - c and 4a - b. In this arrangement the rams 28 are not provided vertically and instead a horizontal ram or rams 50 is/are provided. The rams 50 can be provided at the bottom or the top of the frame 30 of the lifting means 14 as shown in Figures 2a and 2b respectively. The rams are attached to the platform 24 via pulleys 52 and rollers 54 so as to allow the movement of the rams to be translated into movement of the platform to the required height.

The provision of the rams in the side walls and/or a horizontal configuration with pulley connections allow the rams to be mounted in side walls and as a result the platform can be moved to a position adjacent to the surface 32 thereby allowing the direct loading and unloading of goods directly to and from the surface 32.

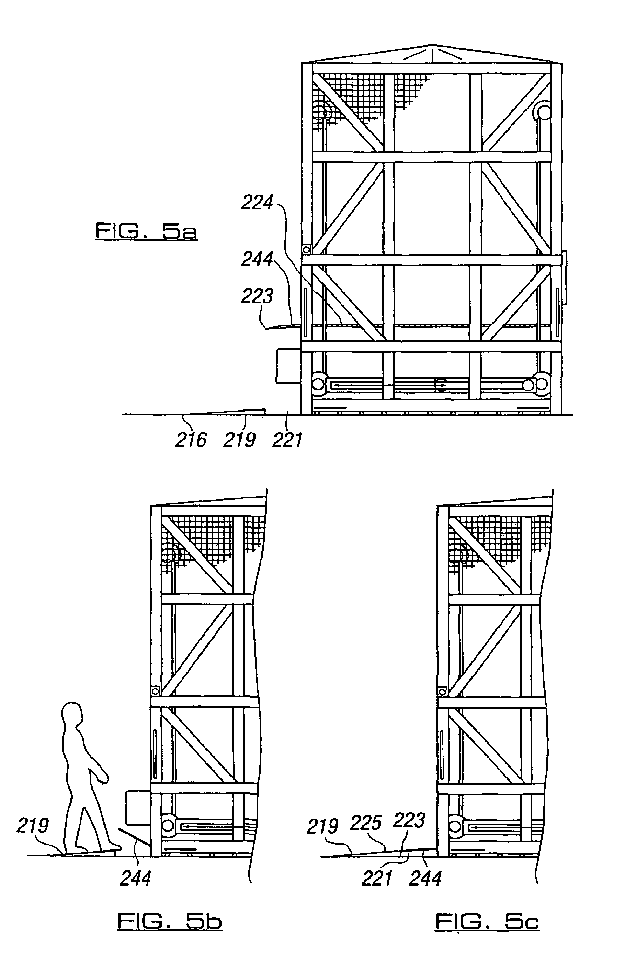

In all embodiments shown and indeed in other lifting means, the platform can include a pivotal ramp section 144 and this particular feature is explained in more detail with regard to Figure 5a - c wherein there is shown an edge part of the platform 224 with the pivotal portion 244, pivoted downwardly in Figure 5c. A loading bay 216 is also shown and normally, the pivotal section 144 would be required to pivot completely down to contact with the loading bay level 216 and it will therefore be appreciated that the angle of the ramp formed, would be relatively steep such that it would be difficult to roll goods storage apparatus such as rollcages or the like, off and on the ramp formed by the portion 244. In accordance with this embodiment an extended ramp section is provided on the loading bay 216. The extended ramp section 219 can be permanently fixed in position on the loading bay 216 or alternatively may be selectively positioned on the loading bay. The ramp includes a portion 221 for the reception of the end 223 of the pivotal portion 244 and therefore the top surface 225 of the ramp section 219 and the pivotal portion 244 top surface form a continuous surface onto the surface of the loading bay 216 which is still ramped but has a much shallower angle than would be the case than if the pivotal portion 244 of the platform itself was placed directly onto the loading bay 216.

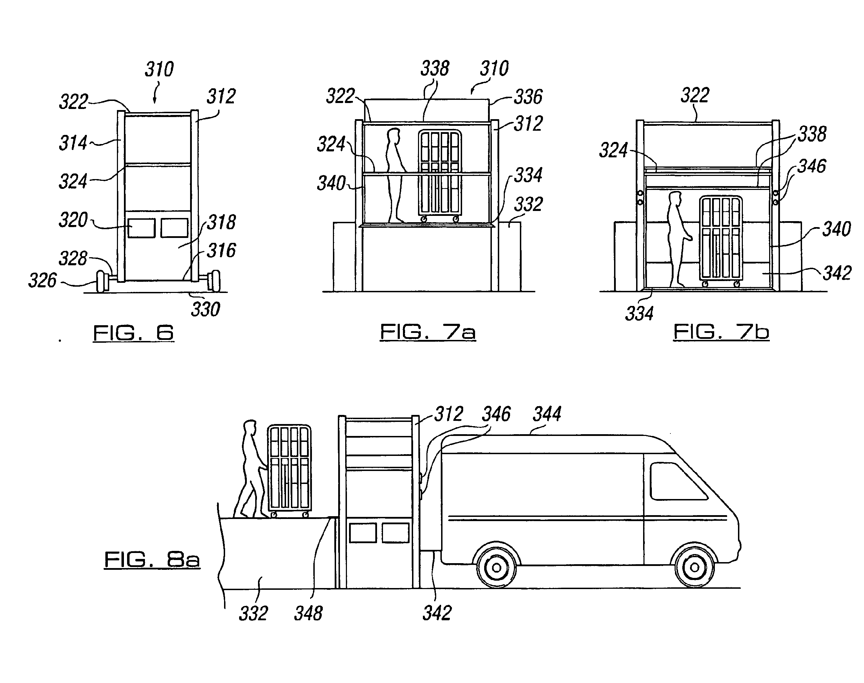

Figure 6 shows a further embodiment of lifting apparatus 310 and it should be appreciated that the features described in this embodiment can be incorporated into the embodiments previously described. Front 312 and rear 314 pillars are provided extending vertically from each corner of a generally horizontal rectangular base 316. An end wall 318 has two apertures 320 and extends across an end of the apparatus 310 between a front post 312 and a corresponding rear post 314. Lower 322 and upper 324 elongate members in the form of supporting bars extend between posts 312 and 314 disposed above the side wall 318.

Slave wheels 326 are attached to the apparatus 310 in the vicinity of the base 316 by connecting members 328 in order to allow the apparatus to be manually moved into position for loading/unloading. The slave wheels 326 are detachable once the lifting apparatus 310 is in position for use so that the base 316 sits generally flush with the floor 330. In other embodiments, such as those previously described, no wheels may be provided at all.

Figs 7A and 7B show the lifting apparatus 310 positioned adjacent a loading dock 332 for use. A rectangular platform 334 extends between front 312 and back 314 posts and is parallel to the base 316. An extendable portion in the form of a panel 342 is pivotally attached to the platform 334 and extends a short distance above the platform 334 between the rear posts 314 along one side of the lifting apparatus 310. A lower 324 and upper 322 support bar are arranged generally above head height between the front posts 312. The platform 334 is provided with vertical frame members 336 and horizontal frame members 338 to form an inner frame 340.

In Fig. 7A the platform 334 has been raised to be at the same height as the adjacent dock 332 so that a loader may enter the inner frame 340 from the dock 332. The support bars 322 and 324 prevent a loader from overstepping the front end of the platform 334 and falling to the floor 330.

In Fig. 7B the platform 334 has moved vertically downwards in unison with the inner frame 340 so that the loader can exit at floor level. The horizontal frame members 338 now form a barrier preventing anyone falling into or trying to incorrectly enter the lifting apparatus 310 when the inner frame 340 is at a lowered position. Thus the combination of the stationary lower 324 and upper 322 support bars and the movable horizontal frame members 338 ensure that all four sides of the lift 310 are safe at all times.

The operation between Figs. 7A and 7B may be reversed such that the loader enters the frame 340 at floor level 330 and is raised up to the height of the dock 332 for exit. Upon entering the lift 310 at floor level, the panel 342 provides a backstop to prevent a loaded trolley overrunning the rear edge of the platform 34.

The platform 334 is raised and lowered by an electric motor (not shown) powered by onboard batteries and thus the lifting apparatus 310 does not need to be hard wired to a mains supply for operation. The lifting apparatus is provided with an onboard 110 Volt charger for charging the batteries.

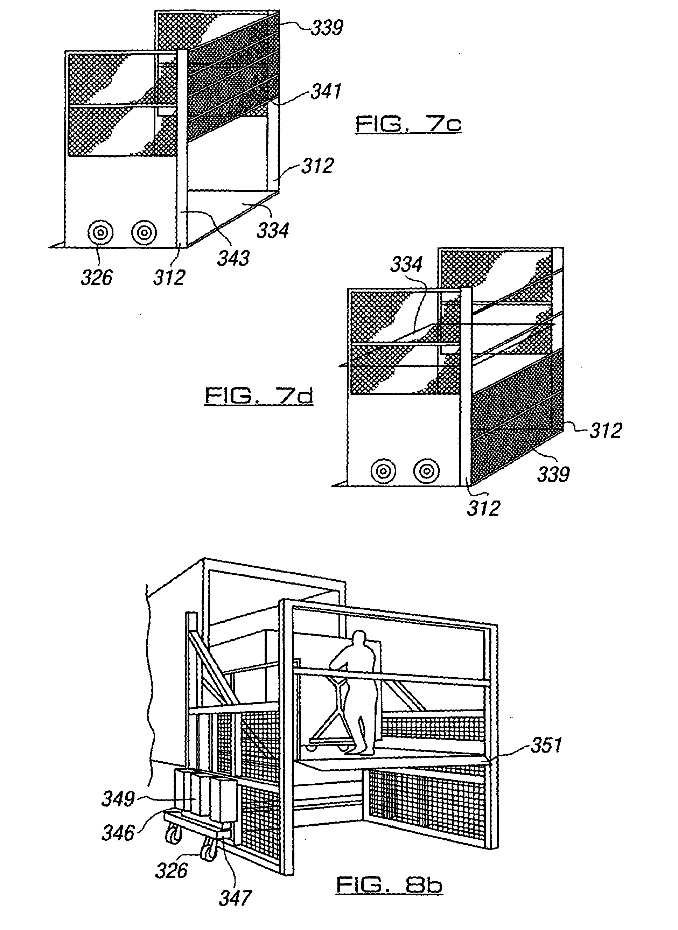

In figures 7C and 7D an obstructing member has been provided in the form of a safety gate 339 with a mesh extending across a gate frame 341. The safety gate 339 extends between front pillars 312 and is attached at each end to a pulley system 343 located within each pillar. The pulley system 343 is attached to the platform 334 such that when the platform is raised as shown in Figure 7D, the safety gate 339 is lowered to obstruct entrance at ground level. Lowering the platform 334 raises the gate 339 in order to allow access at ground level and prevent access from a floor at a higher level.

In Fig. 8A the lifting apparatus 10 is interposed between a dock 332 and the rear of a van 344. The front posts 312 are sufficiently broad to provide the driver with a clear indication of the required loading position for the van 344. The front posts 312 are also provided with proximity sensors and lights 346 to determine the positioning of the van 344 and to advise the driver that he has correctly docked. A pair of green and red lights 346 may be provided to indicate correct or incorrect docking respectively, or else a single light 346 of any colour may signal correct docking.

The elevating platform 334 in Figure 8A bridges into the trailer 344 by way of the platform extension 342. A loading height for the vehicle 344 may be predetermined and input so that, once the platform 334 achieves the correct height, the platform extension 346 is extended forward on rollers (not shown) from the front of the platform 334 towards the rear of the van 344 to form a bridging plate. Once set, the platform extension 342 will extend repeatedly at the desired height.

An additional platform extension 348 may also be extended from the rear of the platform 334 at the height of the dock 332 so that the loader is not required to cross any potentially hazardous gaps during loading/unloading.

The platform extension 342 may comprise two sections, which are independently extendable, such that a first leading edge extends out to the van 344, allowing the loaders to stand fully up to the rear of the load. Once the rearmost stacks of packages are removed, the bridge 342 may then be extended by way of a second sliding section further into the van 344 to allow easy access for hand pallet trucks or extendable scissors, etc.

This type of extending platform would be particularly suited to high elevation applications, such as the loading/unloading of the second floor of a double deck trailer.

In figure 8B the platform has been raised to allow access to the rear end of a container. In this embodiment, the platform 334 has a leading edge portion 351 which extends at a fixed angle to the platform to provide a ramp when the platform 334 is in a lowered position.

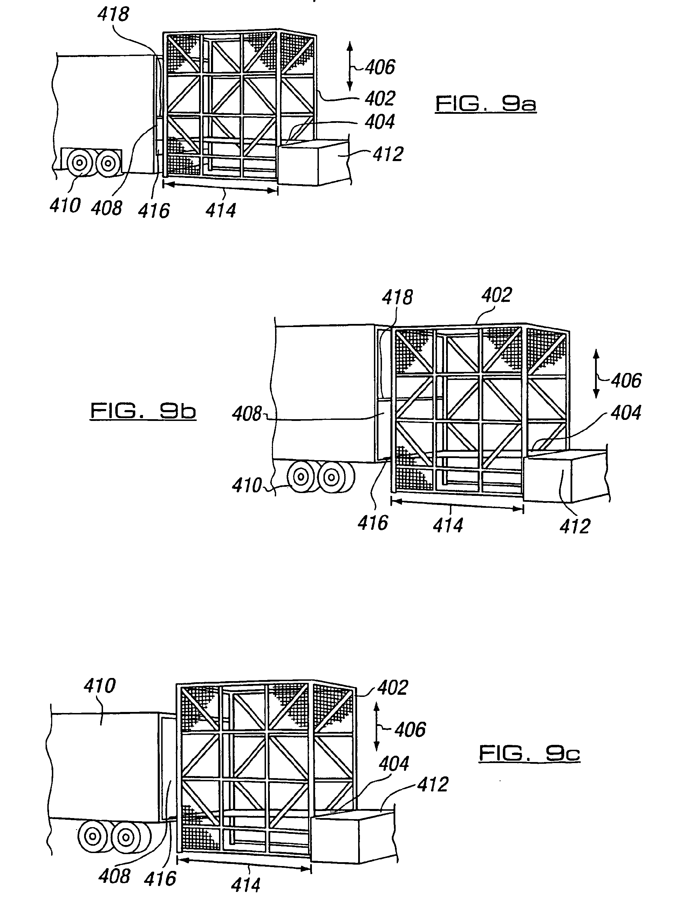

Referring now to Figures 9a to d, there is illustrated apparatus in accordance with the invention in another embodiment. The apparatus includes a frame 402 within which is provided a platform 404 which can be selectively moved in a vertical position as indicated by arrow 406 in the vertical plane. In the embodiment shown in Figures 9a to d, the movement means themselves are not shown for ease of illustration but it will clearly be seen how the platform 404 can be moved to lie in a horizontal position at various heights and/or may be tilted as shown in Figures 9b-d to allow the matching of the floor of a goods first storage area 408 which in this case is in the form of a vehicle trailer 410 and a second storage area 412 which, in this case, is a loading bay for a warehouse (not shown). It will be seen how the apparatus sits in the gap 414 lying between said storage areas.

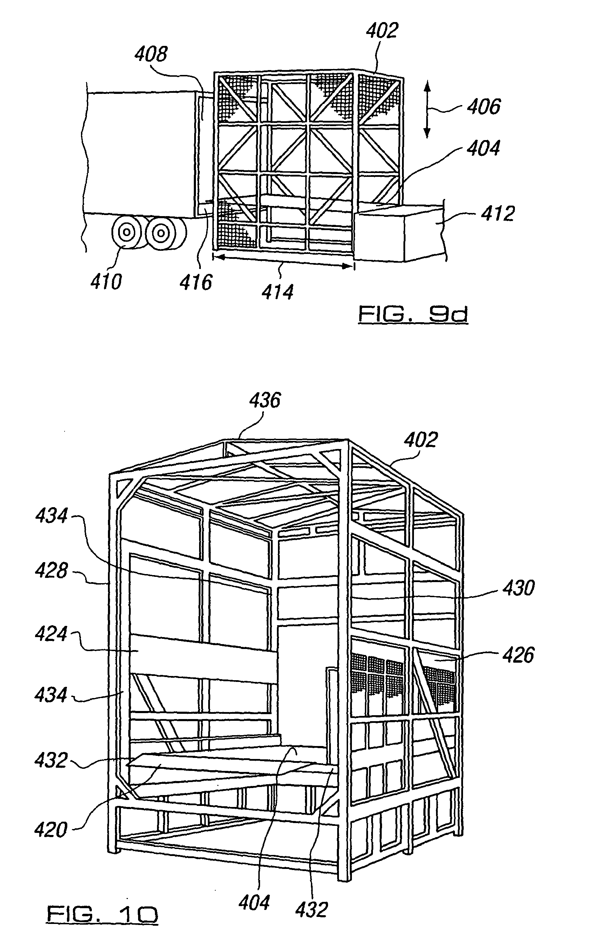

In Figures 9a and b, the storage area trailer 410 is what is referred to as a multideck trailer in which there is provided a first floor 416 and a second floor 418 at a spaced height above the first floor 412. In Figures 9c and d there is provided a standard trailer and container respectively with a single floor 416. In each case, the platform 404 can be moved to allow access to the particular height of the floor in the storage area 408 and also be moved to allow direct matching with the loading bay level to allow the goods on the platform to be moved into and from the respective storage areas.

Figure 10 illustrates the embodiment of the invention of Figures 9a-d in more detail in which in this case, there is shown a platform 404 with a ramp 420 provided which can be moved between the retracted position shown to an extended position in which the same is folded down and contacts with the support surface 422. Also shown are the movement means which in this case comprise first and second hydraulic rams 424, 426 which are provided within housings as shown on the side walls 428, 430 of the frame 402 and which are connected to the platform via flexible members such as lengths of chain (not shown). The platform 404 is in turn provided with guide means 432 which can be T-shaped in cross section and which engage in C-shaped column guide means 434 at the edges of the side walls 428, 430. In this case, the platform has a guide means at each corner. The side walls 428. 430 and roof 436 can be enclosed by a flexible material to prevent the ingress of inclement weather and protect goods from damage.

A main advantage of the apparatus is that the same can be provided in a modular form and can be provided having been assembled under factory conditions. Typically, the frame in the form of a body module and roof module, having been assembled with the platform and drive means under factory conditions delivered for use on site. As the modules are clearly formed the same can be quickly and easily assembled on site without the need for construction work to be provided.

Use of the apparatus, in combination with a vehicle trailer 410, which has a first floor 416 at a first level and a second floor 418 at a second level is particularly effective as the goods in the vehicle storage trailer 410 can be moved onto the platform 404 with operatives and movement apparatus being freely usable. Once the goods are moved onto the platform, the platform can then be lowered to the required height for access to another storage area loading bay to allow the goods to be moved between the various locations.

The present invention therefore provides lifting apparatus for use in the movement of goods between first and second goods storage areas, and typically at least one of which is transportable. The apparatus can be provided in a modular fashion and placed in position ready for use on site without the need for extensive installation operations.

## Claims

1. Lifting apparatus (10;310) for the movement of goods between a first, vehicle, goods storage area (2;102;410), said goods storage area having an opening (6) and at least one floor (8;10;108;416;418) and a second goods storage area (16;20;118;216;3,32;412) having an opening (18) and at least one floor (16;116), and a gap (22) between said first and second areas, said apparatus provided in said gap, and said lifting apparatus having a frame (30;130;340;402) and a platform (24;124;224;334;404) which is selectively movable at least in a vertical plane with respect to the frame so as to be able to lie at least in line with the level of said floors of the goods storage areas, said frame placed in position in said gap with the base of the frame in contact with a support surface (32;330) **characterised in that** said apparatus is formed with the frame in the form of a body module and roof module, said modules assembled with the platform and drive means under factory conditions and delivered to the site for use at which the body and roof modules are connected to form the lifting apparatus.

2. Apparatus according to claim 1 wherein the support surface with which the base is in contact is at the same level as the ground surface on which the wheels of the vehicle goods storage area are in contact.

3. Apparatus according to claim 1 wherein the base of the frame of the lifting means is in contact with a ground surface at the same level as the floor level of the second goods storage area.

4. Apparatus according to claim 1 wherein the first goods storage area has first and second floors which are vertically spaced and the platform is movable so as to be selectively positioned in line with said first or second floor.

5. Apparatus according to claim 1 wherein the apparatus incorporates any or any combination of buffers, sealing means and/or visual and/or audible indicators.

6. Apparatus according to claim 1 wherein the lifting apparatus is placed on mounting pads positioned in the gap and secured thereto and/or the second goods storage area.

7. Apparatus according to claim 1 wherein the apparatus platform is movable in the vertical plane under the influence of one or more hydraulic rams.

8. Apparatus according to claim 7 wherein the hydraulic rams are mounted in the frame, in a vertical plane in the side walls.

9. Apparatus according to claim 7 wherein the hydraulic rams are mounted in the frame, in a substantially horizontal plane.

10. Apparatus according to claim 1 wherein the vehicle goods storage area incorporates a platform which depends outwardly from an opening in the goods storage area and when in that position the gap which is filled by the lifting means apparatus extends from the edge of the vehicle fitted platform to the warehouse or loading bay.

11. Apparatus according to claim 1 wherein the second goods storage area is a warehouse with an opening spaced back from the edge of the floor which forms a loading bay and the gap in this case is defined as the edge of the loading bay to the opening of the goods storage area or the edge of an extended platform of the vehicle goods storage area.

12. Apparatus according to claim 1 wherein the platform is angularly movable from a substantially horizontal plane so as to allow a ramp to be formed.

13. Apparatus according to claim 1 wherein the apparatus includes a buffer assembly to at least partially absorb impact between the lifting means and the fixed loading bay structure which may occur due to the movement of the vehicle goods storage area into position.

14. Apparatus according to claim 1 wherein the lifting means is provided with rollers, said rollers being provided to allow limited movement of the lifting means with regard to the buffer assembly.

15. Apparatus according to claim 1 wherein there is provided an extendable ramp section for use at an edge of the platform said platform having a pivotally movable section which can be moved between a raised position and a lower position in which the same extends downwardly from the platform towards a supporting surface so as to provide a ramp along which goods can be moved.

16. Apparatus according to claim 1 **characterised in that**, the platform is accessible via a first edge when the height of the platform is equal to a first height, and accessible via a second edge when the platform is at a second height, said apparatus including an obstructing member arranged such that, when the platform is positioned at the first height, the obstructing member obstructs access to the platform from the second height.

17. Apparatus according to claim 16 wherein the platform has a first side and a second side arranged such that the first edge of the platform extends across the first side and the second platform edge extends across the second side and each platform edge can be raised and lowered relative to each respective side.

18. Apparatus according to claim 17 wherein access to the platform from an adjacent operating surface or floor which is not at the same height as the platform, is obstructed in order to ensure that entrance to and exit from the platform is only possible at predetermined heights.

19. Apparatus according to claim 16 wherein the obstructing member is fixed a predetermined distance from the platform and movable therewith.

20. Apparatus according to claim 19 wherein the obstructing member is disposed above the platform and arranged in a generally parallel orientation to the platform.

21. Apparatus according to claim 20 wherein the distance between the platform and the obstructing member is greater than the distance between the first and second operating heights.

22. Apparatus according to claim 21 wherein the obstructing member extends above the higher floor or surface when the platform is in a lowered position and thus prevents anyone at the higher level from incorrectly entering the platform.

23. Apparatus according to claim 16 wherein the obstructing member is held in position relative to the platform by at least one supporting arm extending substantially at right angles from the platform.

24. Apparatus according to claim 23 wherein the at least one supporting arm extends from one edge of the platform.

25. Apparatus according to claim 24 wherein a further supporting arm is spaced from the first supporting arm and connected thereto by the obstructing member so as to form a frame along the one edge of the platform.

26. Apparatus according to claim 25 wherein the supporting arms in combination form a frame extending above each edge of the platform.

27. Apparatus according to claim 16 wherein the obstructing member is movable relative to the platform.

28. Apparatus according to claim 27 wherein the platform and obstructing member are connected by a pulley system.

29. Apparatus according to claim 16 wherein wheels are provided which are selectively provided in a condition to allow the apparatus to be moved along a surface or in a condition in which the apparatus is located in a fixed position with respect to said surface.

30. Apparatus according to claim 16 wherein the apparatus can be lifted and moved by a forklift vehicle.

31. Apparatus according to claim 16 wherein the platform has an extendable portion which is retractably extendable from the platform during operation.

32. Apparatus according to claim 31 wherein an extendable portion is provided at each edge of the platform, such that one portion extends from the first edge at the first operating height to marry with the first operating surface and a second portion extends at a second operating height to marry with the second operating surface.

33. Apparatus according to claim 1 **characterised in that** the frame includes drive means to drive the movement of said platform said drive means including at least one hydraulic ram acting on one or more flexible members connected to the platform and influenced by movement of the ram to in turn cause movement of the platform with respect to the frame.

34. Apparatus according to claim 33 wherein two hydraulic rams are provided, each of the hydraulic rams being mounted on a side face of the frame and typically respective rams are mounted on opposing faces of the frame.

35. Apparatus according to claim 34 wherein the hydraulic rams are mounted in a plane parallel with the plane of the platform and perpendicular to the direction of movement of the platform.

36. Apparatus according to claim 35 wherein the hydraulic rams lie substantially flush with the inner surfaces of the side walls of the frame.

37. Apparatus according to claim 33 wherein the platform has a plurality of guide means, each of said guide means mounted for movement along matching guide means located on the frame and said guide means are mounted in a substantially vertical axis.

38. Apparatus according to claim 37 wherein the guide means are spaced apart around the periphery of the platform with a guide means provided at each corner of the platform.

39. Apparatus according to claim 37 wherein the relative movement between the guide means on the platform and the frame, is achieved via flexible members typically in the form of cable or chain connections between the hydraulic ram and the platform.

40. Apparatus according to claim 39 wherein the cable or chain connections, are moved as a result of movement of the ram such that when the ram is moved to a fully extended position, then the platform will sit at its lowest position and when the ram is retracted, the platform is caused to move to its highest position.

41. Apparatus according to claim 33 wherein the platform includes attachment plates which can be moved between extended and retracted positions which when extended allow the platform to be joined to an adjacent surface.

42. Apparatus according to claim 37 wherein the platform can move beyond the end of the guide means provided on the frame as the guide means on the platform are of a length to allow the same to extend beyond the guide means on the frame with a portion of the guide means lying in a guided position.

43. Apparatus according to claim 1 wherein the side walls and/or roof of the frame are enclosed to provide protection from inclement weather conditions.

44. A method for providing a lifting means apparatus (10;310) for use in conjunction with a first vehicle goods storage area (2;102;410) and a second goods storage area in the form of a warehouse (16;20;118;216;332;412) and to allow movement of goods between the same, said lifting means incorporating a frame (30;130;340;402), a platform (24;124;224;334;404) movable along a vertical axis with respect to said frame, said frame provided with a base to be mounted on a support surface (32;330) at the location of use and positioned between the warehouse on a first side and the location for the vehicle goods storage area on an opposing side, **characterised in that** the frame is in the form of a body module and roof module, said modules assembled under factory conditions with the platform and drive means and delivered for use on site, and connected to form the lifting apparatus.

45. A method according to claim 44 wherein the method includes the steps of ensuring that the platform is movable between the levels of floors in the warehouse and/or in vehicle goods storage areas which are brought into position with respect to the lifting means apparatus.

46. A method according to claim 44 wherein those faces of the frame which are not located adjacent to the warehouse or vehicle goods storage area openings are provided with a screen or barrier.

## Patentansprüche

1. Hebevorrichtung (10; 310) zum Bewegen von Waren zwischen einem ersten Fahrzeug-Warenlagerbereich (2; 102; 410), wobei der genannte Warenlagerbereich eine Öffnung (6) und wenigstens einen Boden (8; 10; 108; 416; 418) hat, und einem zweiten Warenlagerbereich (16; 20; 118; 216; 332; 412), der eine Öffnung (18) und wenigstens einen Boden (16; 116) hat, und einem Zwischenraum (22) zwischen dem genannten ersten und dem genannten zweiten Bereich, wobei die Vorrichtung in dem genannten Zwischenraum bereitgestellt ist und wobei die genannte Hebevorrichtung einen Rahmen (30; 130; 340; 402) und eine Plattform (24; 124; 224; 334; 404) hat, die wenigstens in einer ersten vertikalen Ebene in Bezug auf den Rahmen selektiv beweglich ist, um wenigstens auf einer Linie mit dem Niveau der genannten Böden der Warenlagerbereiche liegen zu können, wobei der genannte Rahmen in dem genannten Zwischenraum aufgestellt ist, wobei die Basis des Rahmens mit einer tragenden Fläche (32; 330) in Kontakt ist; **dadurch gekennzeichnet, dass** die genannte Vorrichtung mit dem Rahmen in Form eines Gehäusemoduls und eines Dachmoduls ausgebildet ist, wobei die genannten Module mit der Plattform und einer Antriebseinrichtung unter Werksbedingungen zusammengebaut und zum Standort geliefert werden, wobei das Gehäuse- und das Dachmodul zur Verwendung an diesem zu der Hebevorrichtung zusammengebaut werden.

2. Vorrichtung nach Anspruch 1, wobei die tragende Fläche, mit der die Basis in Kontakt ist, auf dem gleichen Niveau wie die Bodenfläche ist, auf der die Räder des Fahrzeug-Warenlagerbereichs in Kontakt sind.

3. Vorrichtung nach Anspruch 1, wobei die Basis des Rahmens der Hebevorrichtung mit einer Bodenfläche auf dem gleichen Niveau wie das Bodenniveau des zweiten Warenlagerbereichs in Kontakt ist.

4. Vorrichtung nach Anspruch 1, wobei der erste Warenlagerbereich einen ersten und einen zweiten Boden hat, die vertikal voneinander beabstandet sind, und die Plattform beweglich ist, um selektiv auf einer Linie mit dem genannten ersten oder zweiten Boden positioniert zu werden.

5. Vorrichtung nach Anspruch 1, wobei die Vorrichtung beliebige Puffer, Dichtungsmittel und/oder visuelle und/oder akustische Anzeigen oder eine beliebige Kombination dieser beinhaltet.

6. Vorrichtung nach Anspruch 1, wobei die Hebevorrichtung auf Montagestücke gestellt ist, die in dem Zwischenraum positioniert sind, und daran und/oder dem zweiten Warenlagerbereich befestigt ist.

7. Vorrichtung nach Anspruch 1, wobei die Plattform der Vorrichtung unter dem Einfluss von einem oder mehreren hydraulischen Druckzylinder(n) in der vertikalen Ebene beweglich ist.

8. Vorrichtung nach Anspruch 7, wobei die hydraulischen Druckzylinder in einer vertikalen Ebene in den Seitenwänden im Rahmen eingebaut sind.

9. Vorrichtung nach Anspruch 7, wobei die hydraulischen Druckzylinder in einer im Wesentlichen horizontalen Ebene in dem Rahmen eingebaut sind.

10. Vorrichtung nach Anspruch 1, wobei der Fahrzeug-Warenlagerbereich eine Plattform beinhaltet, die von einer Öffnung in dem Warenlagerbereich nach außen abhängt, und wobei, wenn sie in dieser Position ist, sich der Zwischenraum, der von der Hebevorrichtung gefüllt wird, von dem Rand der am Fahrzeug angebrachten Plattform zu dem Lagerhaus oder dem Verladebereich erstreckt.

11. Vorrichtung nach Anspruch 1, wobei der zweite Warenlagerbereich ein Lagerhaus ist mit einer vom Rand des Bodens zurückversetzten Öffnung, die einen Verladebereich bildet, und der Zwischenraum in diesem Fall als der Rand des Verladebereichs bis zu der Öffnung des Warenlagerbereichs oder dem Rand einer verlängerten Plattform des Fahrzeug-Warenlagerbereichs definiert ist.

12. Vorrichtung nach Anspruch 1, wobei die Plattform winklig aus einer im Wesentlichen horizontalen Ebene beweglich ist, so dass eine Rampe gebildet werden kann.

13. Vorrichtung nach Anspruch 1, wobei die Vorrichtung eine Pufferanordnung beinhaltet, um Stöße zwischen der Hebevorrichtung und der festen Verladebereichkonstruktion, die möglicherweise aufgrund des In-Position-Bewegens des Fahrzeug-Warenlagerbereichs stattfinden können, wenigstens teilweise zu absorbieren.

14. Vorrichtung nach Anspruch 1, wobei die Hebevorrichtung mit Rollen versehen ist, wobei die genannten Rollen bereitgestellt sind, um eine begrenzte Bewegung der Hebevorrichtung in Bezug auf die Pufferanordnung zuzulassen.

15. Vorrichtung nach Anspruch 1, wobei ein verlängerbarer Rampenabschnitt zur Verwendung an einem Rand der Plattform bereitgestellt ist, wobei die genannte Plattform einen schwenkbeweglichen Abschnitt hat, der zwischen einer gehobenen Position und einer gesenkten Position bewegt werden kann, in der sich dieser von der Plattform abwärts in Richtung auf eine tragende Fläche erstreckt, um eine Rampe bereitzustellen, entlang derer Waren bewegt werden können.

16. Vorrichtung nach Anspruch 1, **dadurch gekennzeichnet, dass** die Plattform über einen ersten Rand zugänglich ist, wenn die Höhe der Plattform gleich einer ersten Höhe ist, und über einen zweiten Rand zugänglich ist, wenn die Plattform sich auf einer zweiten Höhe befindet, wobei die Vorrichtung ein Sperrelement beinhaltet, das so angeordnet ist, dass das Sperrelement Zugang zu der Plattform von der zweiten Höhe sperrt, wenn die Plattform auf der ersten Höhe positioniert ist.

17. Vorrichtung nach Anspruch 16, wobei die Plattform eine erste Seite und eine zweite Seite hat, die so angeordnet sind, dass der erste Rand der Plattform über die erste Seite verläuft und der zweite Plattformrand über die zweite Seite verläuft und jeder Plattformrand relativ zu der jeweiligen Seite gehoben und gesenkt werden kann.

18. Vorrichtung nach Anspruch 17, wobei Zugang zu der Plattform von einer/einem angrenzenden Arbeitsfläche oder Boden, die/der nicht auf der gleichen Höhe wie die Plattform ist, gesperrt ist, um sicherzustellen, dass Zugang zu und Verlassen der Plattform nur auf vorbestimmten Höhen möglich ist.

19. Vorrichtung nach Anspruch 16, wobei das Sperrelement in einer vorbestimmten Entfernung von der Plattform fixiert und mit ihr beweglich ist.

20. Vorrichtung nach Anspruch 19, wobei sich das Sperrelement über der Plattform befindet und in einer allgemein parallelen Ausrichtung zu der Plattform angeordnet ist.

21. Vorrichtung nach Anspruch 20, wobei die Entfernung zwischen der Plattform und dem Sperrelement größer als die Entfernung zwischen der ersten und der zweiten Arbeitshöhe ist.

22. Vorrichtung nach Anspruch 21, wobei das Sperrelement sich über den höheren Boden oder die höhere Oberfläche erstreckt, wenn die Plattform in einer gesenkten Position ist, und so verhindert, dass sich jemand auf dem höheren Niveau falsch auf die Plattform begibt.

23. Vorrichtung nach Anspruch 16, wobei das Sperrelement von wenigstens einem Tragarm, der im Wesentlichen im rechten Winkel von der Plattform verläuft, in Solllage relativ zu der Plattform gehalten wird.

24. Vorrichtung nach Anspruch 23, wobei der wenigstens eine Tragarm sich von einem Rand der Plattform erstreckt.

25. Vorrichtung nach Anspruch 24, wobei ein weiterer Tragarm von dem ersten Tragarm beabstandet ist und durch das Sperrelement damit verbunden ist, um entlang dem einem Rand der Plattform einen Rahmen zu bilden.

26. Vorrichtung nach Anspruch 25, wobei die Tragarme in Kombination einen Rahmen bilden, der sich über jeden Rand der Plattform erstreckt.

27. Vorrichtung nach Anspruch 16, wobei das Sperrelement relativ zu der Plattform beweglich ist.

28. Vorrichtung nach Anspruch 27, wobei die Plattform und das Sperrelement durch einen Flaschenzug verbunden sind.

29. Vorrichtung nach Anspruch 16, wobei Räder bereitgestellt sind, die selektiv in einem Zustand bereitgestellt werden, um die Vorrichtung entlang einer Oberfläche bewegen zu können, oder in einem Zustand, in dem sich die Vorrichtung in einer festen Position in Bezug auf die genannte Oberfläche befindet.

30. Vorrichtung nach Anspruch 16, wobei die Vorrichtung von einem Gabelstaplerfahrzeug gehoben und transportiert werden kann.

31. Vorrichtung nach Anspruch 16, wobei die Plattform einen ausziehbaren Teil hat, der während des Betriebs einziehbar aus der Plattform ausziehbar ist.

32. Vorrichtung nach Anspruch 31, wobei an jedem Rand der Plattform ein ausziehbarer Teil bereitgestellt ist, so dass ein Teil sich von dem ersten Rand auf der ersten Arbeitshöhe erstreckt, um mit der ersten Arbeitsfläche gepaart zu werden, und ein zweiter Teil sich auf einer zweiten Arbeitshöhe erstreckt, um mit der zweiten Arbeitsfläche gepaart zu werden.

33. Vorrichtung nach Anspruch 1, **dadurch gekennzeichnet, dass** der Rahmen eine Antriebseinrichtung beinhaltet zum Antreiben der Bewegung der genannten Plattform, wobei die genannte Antriebseinrichtung wenigstens einen hydraulischen Druckzylinder beinhaltet, der auf ein oder mehrere flexible(s) Element(e) wirkt, die mit der Plattform verbunden sind und von der Bewegung des Druckzylinders beeinflusst werden, um wiederum die Bewegung der Plattform in Bezug auf den Rahmen zu verursachen.

34. Vorrichtung nach Anspruch 33, wobei zwei hydraulische Druckzylinder bereitgestellt sind, wobei die hydraulischen Druckzylinder jeweils an einer Seitenfläche des Rahmens montiert sind und im typischen Fall jeweilige Druckzylinder an einander gegenüberliegenden Stirnflächen des Rahmens montiert sind.

35. Vorrichtung nach Anspruch 34, wobei die hydraulischen Druckzylinder in einer zu der Ebene der Plattform parallelen und zu der Bewegungsrichtung der Plattform lotrechten Ebene montiert sind.

36. Vorrichtung nach Anspruch 35, wobei die hydraulischen Druckzylinder im Wesentlichen mit den Innenflächen der Seitenwände des Rahmens bündig sind.

37. Vorrichtung nach Anspruch 33, wobei die Plattform eine Vielzahl von Führungsmitteln aufweist, wobei die genannten Führungsmittel jeweils zur Bewegung entlang übereinstimmender, an dem Rahmen befindlicher Führungsmittel angebracht sind und die genannten Führungsmittel in einer im Wesentlichen vertikalen Achse angebracht sind.

38. Vorrichtung nach Anspruch 37, wobei die Führungsmittel um den Umfang der Plattform herum mit Zwischenraum zueinander angeordnet sind, wobei an jeder Ecke der Plattform ein Führungsmittel bereitgestellt ist.

39. Vorrichtung nach Anspruch 37, wobei die relative Bewegung zwischen den Führungsmitteln an der Plattform und dem Rahmen durch flexibleElemente erzielt wird, im typischen Fall in Form von Draht- oder Kettenverbindungen zwischen dem hydraulischen Druckzylinder und der Plattform.

40. Vorrichtung nach Anspruch 39, wobei die Draht- oder Kettenverbindungen infolge der Bewegung des Druckzylinders bewegt werden, so dass, wenn der Druckzylinder auf eine ganz ausgefahrene Position bewegt wird, die Plattform dann an ihrer niedrigsten Position sitzt, und wenn der Druckzylinder eingezogen wird, die Plattform veranlasst wird, sich auf ihre höchste Position zu bewegen.

41. Vorrichtung nach Anspruch 33, wobei die Plattform Anbringungsplatten beinhaltet, die zwischen einer ausgezogenen und einer eingezogenen Position bewegt werden können, die, wenn sie ausgezogen sind, das Anfügen der Plattform an eine angrenzende Oberfläche ermöglichen.

42. Vorrichtung nach Anspruch 37, wobei die Plattform sich über das Ende der an dem Rahmen bereitgestellten Führungsmittel hinaus bewegen kann, da die Führungsmittel an der Plattform eine Länge haben, die es ihnen erlaubt, sich über die Führungsmittel am Rahmen hinaus zu erstrecken, wobei ein Abschnitt der Führungsmittel in einer geführten Position liegt.

43. Vorrichtung nach Anspruch 1, wobei die Seitenwände und/oder das Dach des Rahmens geschlossen sind, um vor ungünstigen Wetterverhältnissen zu schützen.

44. Verfahren zum Bereitstellen einer Hebevorrichtung (10; 310) zur Verwendung in Verbindung mit einem ersten Fahrzeug-Warenlagerbereich (2; 102; 410) und einem zweiten Warenlagerbereich (16; 20; 118; 216; 332; 412) und zum Erlauben der Beförderung von Waren zwischen diesen, wobei die genannte Hebevorrichtung einen Rahmen (30; 130; 340; 402) beinhaltet, wobei eine Plattform (24; 124; 224; 334; 404) entlang einer vertikalen Achse in Bezug auf den Rahmen beweglich ist, wobei der genannte Rahmen mit einer Basis versehen ist, die am Verwendungsort auf einer tragenden Fläche (32; 330) zu montieren ist, und zwischen dem Lagerhaus auf einer ersten Seite und dem Ort für den Fahrzeugs-Warenlagerbereich auf einer gegenüberliegenden Seite positioniert ist, **dadurch gekennzeichnet, dass** der Rahmen die Form eines Gehäusemoduls und eines Dachmoduls hat, wobei die genannten Module mit der Plattform und einer Antriebseinrichtung unter Werksbedingungen zusammengebaut und zur Verwendung am Standort geliefert werden und miteinander verbunden werden, um die Hebevorrichtung zu bilden.

45. Verfahren nach Anspruch 44, wobei das Verfahren die Schritte des Sicherstellens, dass die Plattform zwischen den Niveaus der Böden in dem Warenlager- und/oder dem Fahrzeug-Warenlagerbereich bewegt werden kann, die in Bezug auf die Hebevorrichtung in Position gebracht werden, aufweist.

46. Verfahren nach Anspruch 44, wobei diejenigen Stirnflächen des Rahmens, die sich nicht neben den Öffnungen des Warenlager- oder des Fahrzeug-Warenlagerbereichs befinden, mit einer Abtrennung oder Schranke versehen sind.

## Revendications

1. Appareil de levage (10 ; 310) pour permettre le mouvement de marchandises entre une première aire de stockage de marchandises de véhicule (2 ; 102 ; 410), ladite aire de stockage de marchandises présentant une ouverture (6) et au moins un plancher (8 ; 10 ; 108 ; 416 ; 418) et une deuxième aire de stockage de marchandises (16 ; 20 ; 118 ; 216 ; 332 ; 412) possédant une ouverture (18) et au moins un plancher (16 ; 116), et un espace (22) entre lesdites première et deuxième aires, ledit appareil se trouvant dans ledit espace, et ledit appareil de levage possédant un cadre (30 ; 130 ; 340 ; 402) et une plate-forme (24 ; 124 ; 224 ; 334 ; 404) qui est apte à être déplacée de façon sélective au moins suivant un plan vertical par rapport au cadre de sorte à pouvoir se situer au moins en alignement avec le niveau desdits planchers des aires de stockage de marchandises, ledit cadre étant mis en position dans ledit espace alors que la base du cadre est en contact avec une surface de support (32 ; 330), **caractérisé en ce que** le cadre dudit appareil est construit sous la forme d'un module corps et d'un module toit, lesdits modules étant assemblés avec la plate-forme et des moyens d'entraînement dans des conditions d'usine et livrés sur le site en vue de leur utilisation, lieu dans lequel les modules corps et toit sont raccordés afin de constituer l'appareil de levage.

2. Appareil selon la revendication 1, la surface de support avec laquelle la base est en contact se trouvant au même niveau que la surface de sol avec laquelle les roues de l'aire de stockage de marchandises de véhicule sont en contact.

3. Appareil selon la revendication 1, la base du cadre des moyens de levage étant en contact avec une surface de sol au même niveau que le niveau de plancher de la deuxième aire de stockage de marchandises.

4. Appareil selon la revendication 1, la première aire de stockage de marchandises possédant des premier et deuxième planchers qui sont espacés dans le plan vertical, et la plate-forme étant apte à être déplacée de sorte à pouvoir être positionnée de façon sélective en alignement avec ledit premier ou deuxième plancher.

5. Appareil selon la revendication 1, l'appareil incorporant l'un des postes suivants, ou une combinaison des postes suivants, à savoir des butées, des moyens de scellement et/ou des indicateurs visuels et/ou sonores.

6. Appareil selon la revendication 1, l'appareil de levage étant placé sur des patins de montage lesquels sont positionnés dans l'espace et assujettis sur celui-ci et/ou la deuxième aire de stockage de marchandises.

7. Appareil selon la revendication 1, la plate-forme de l'appareil étant apte à être déplacée dans le plan vertical sous l'effet d'un ou de plusieurs vérins hydrauliques.

8. Appareil selon la revendication 7, les vérins hydrauliques étant montés dans le cadre, suivant un plan vertical dans les parois latérales.

9. Appareil selon la revendication 7, les vérins hydrauliques étant montés dans le cadre, suivant un plan sensiblement horizontal.

10. Appareil selon la revendication 1, l'aire de stockage de marchandises de véhicule incorporant une plate-forme laquelle dépend vers l'extérieur à partir d'une ouverture ménagée dans l'aire de stockage de marchandises, et lorsqu'elle se trouve dans cette position, l'espace, qui est rempli par l'appareil de moyens de levage, va se prolonger depuis le bord de la plate-forme, montée sur le véhicule, vers l'entrepôt ou le quai de chargement.

11. Appareil selon la revendication 1, la deuxième aire de stockage de marchandises étant un entrepôt dont l'ouverture est située à une certaine distance en retrait à partir du bord du plancher qui forme un quai de chargement, et dans ce cas, l'espace est défini comme étant le bord du quai de chargement jusqu'à l'ouverture de l'aire de stockage de marchandises ou le bord d'une plate-forme déployée d'une aire de stockage de marchandises de véhicule.

12. Appareil selon la revendication 1, la plate-forme étant apte à être déplacée de façon angulaire à partir d'un plan sensiblement horizontal de sorte à permettre la formation d'une rampe.

13. Appareil selon la revendication 1, l'appareil comportant un ensemble butées pour au moins absorber partiellement l'impact, entre les moyens de levage et la structure fixe du quai de chargement, susceptible de se produire en raison du mouvement de l'aire de stockage de marchandises de véhicule lors de sa mise en position.

14. Appareil selon la revendication 1, les moyens de levage étant munis de rouleaux, lesdits rouleaux étant prévus pour permettre un mouvement limité des moyens de levage par rapport à l'ensemble butées.

15. Appareil selon la revendication 1, une section de rampe déployable étant prévue pour être utilisée au niveau d'un bord de la plate-forme, ladite plate-forme possédant une section apte à être déplacée par pivotement qui peut être déplacée entre une position relevée et une position abaissée dans laquelle celle-ci se prolonge vers le bas à partir de la plate-forme vers une surface d'appui de sorte à procurer une rampe le long de laquelle des marchandises peuvent être déplacées.

16. Appareil selon la revendication 1, **caractérisé en ce que** la plate-forme est accessible via un premier bord lorsque la hauteur de la plate-forme est égale à une première hauteur, et accessible via un deuxième bord lorsque la plate-forme se trouve à une deuxième hauteur, ledit appareil comportant un élément d'obstruction lequel est agencé de sorte que, lorsque la plate-forme est positionnée à la première hauteur, l'élément d'obstruction empêche l'accès à la plate-forme à partir de la deuxième hauteur.

17. Appareil selon la revendication 16, la plate-forme présentant un premier côté et un deuxième côté lesquels sont agencés de sorte que le premier bord de la plate-forme s'étend à travers le premier côté et que le deuxième bord de la plate-forme s'étend à travers le deuxième côté, alors que chaque bord de la plate-forme peut être relevé et abaissé par rapport à chaque côté respectif.

18. Appareil selon la revendication 17, l'accès à la plate-forme à partir d'une surface ou d'un plancher opérationnel adjacent qui ne se trouve pas à la même hauteur que la plate-forme, étant entravé pour s'assurer qu'il est uniquement possible d'entrer dans la plate-forme et d'en sortir à des hauteurs prédéterminées.

19. Appareil selon la revendication 16, l'élément d'obstruction étant fixé à une distance prédéterminée par rapport à la plate-forme et pouvant être déplacé avec celle-ci.

20. Appareil selon la revendication 19, l'élément d'obstruction étant disposé au-dessus de la plate-forme et agencé suivant une orientation généralement parallèle à la plate-forme.

21. Appareil selon la revendication 20, la distance entre la plate-forme et l'élément d'obstruction étant plus grande que la distance entre la première et la deuxième hauteurs opérationnelles.

22. Appareil selon la revendication 21, l'élément d'obstruction s'étendant au-dessus de la surface ou du plancher plus élevé lorsque la plate-forme est dans une position abaissée, et empêche ainsi toute personne se trouvant au niveau plus élevé de pénétrer incorrectement dans la plate-forme.

23. Appareil selon la revendication 16, l'élément d'obstruction étant maintenu en position par rapport à la plate-forme par au moins un bras de support lequel s'étend sensiblement à angles droits à partir de la plate-forme.

24. Appareil selon la revendication 23, ledit au moins un bras de support s'étendant à partir d'un bord de la plate-forme.

25. Appareil selon la revendication 24, un bras de support supplémentaire étant espacé du premier bras de support et étant raccordé à celui-ci par l'élément d'obstruction de sorte à former un cadre le long dudit bord de la plate-forme.

26. Appareil selon la revendication 25, les bras de support formant ensemble un cadre lequel s'étend au-dessus de chaque bord de la plate-forme.

27. Appareil selon la revendication 16, l'élément d'obstruction étant apte à être déplacé par rapport à la plate-forme.

28. Appareil selon la revendication 27, la plate-forme et l'élément d'obstruction étant raccordés par un système à poulie.

29. Appareil selon la revendication 16, des roues étant prévues lesquelles sont employées de façon sélective dans un certain état pour permettre à l'appareil d'être déplacé le long d'une surface, ou dans un état dans lequel l'appareil se trouve dans une position fixe par rapport à ladite surface.

30. Appareil selon la revendication 16, l'appareil pouvant être soulevé et déplacé par un véhicule à fourches élévatrices.

31. Appareil selon la revendication 16, la plate-forme possédant une portion déployable qui peut être déployée de façon rétractable à partir de la plate-forme pendant le fonctionnement.

32. Appareil selon la revendication 31, une portion déployable étant prévue au niveau de chaque bord de la plate-forme, de sorte qu'une portion se prolonge à partir du premier bord au niveau de la première hauteur opérationnelle afin de s'apparier avec la première surface opérationnelle, et qu'une deuxième portion se prolonge au niveau d'une deuxième hauteur opérationnelle afin de s'apparier avec la deuxième surface opérationnelle.

33. Appareil selon la revendication 1, **caractérisé en ce que** le cadre comporte des moyens d'entraînement afin de piloter le mouvement de ladite plate-forme, lesdits moyens d'entraînement englobant au moins un vérin hydraulique lequel agit sur un ou plusieurs éléments souples raccordés à la plate-forme et influencés par le mouvement du vérin afin de provoquer, à leur tour, le mouvement de la plate-forme par rapport au cadre.

34. Appareil selon la revendication 33, deux vérins hydrauliques étant prévus, chacun des vérins hydrauliques étant monté sur une face latérale du cadre, alors que typiquement les vérins respectifs sont montés sur des faces opposées du cadre.

35. Appareil selon la revendication 34, les vérins hydrauliques étant montés suivant un plan lequel est parallèle au plan de la plate-forme et perpendiculaire au sens de mouvement de la plate-forme.

36. Appareil selon la revendication 35, les vérins hydrauliques se situant en position sensiblement affleurante avec les surfaces internes des parois latérales du cadre.

37. Appareil selon la revendication 33, la plate-forme possédant une pluralité de moyens de guidage, chacun desdits moyens de guidage étant monté en vue d'un mouvement le long de moyens de guidage correspondants situés sur le cadre, alors que lesdits moyens de guidage sont montés suivant un axe sensiblement vertical.

38. Appareil selon la revendication 37, les moyens de guidage étant espacés l'un de l'autre autour de la périphérie de la plate-forme, alors qu'un moyen de guidage est prévu au niveau de chaque coin de la plate-forme.

39. Appareil selon la revendication 37, le mouvement relatif entre les moyens de guidage sur la plate-forme et le cadre, étant obtenu par le biais d'éléments souples se présentant typiquement sous la forme de raccords à câbles ou à chaînes entre le vérin hydraulique et la plate-forme.

40. Appareil selon la revendication 39, les raccords à câbles ou à chaînes étant déplacés par suite du mouvement du vérin, de sorte que lorsque le vérin est déplacé jusqu'à une position entièrement déployée, alors la plate-forme va se situer à sa position la plus basse, et lorsque le vérin est rétracté, la plate-forme sera obligée de se déplacer vers sa position la plus haute.

41. Appareil selon la revendication 33, la plate-forme comportant des plaques de fixation lesquelles peuvent être déplacées entre une position déployée et une position rétractée, qui lorsqu'elles sont déployées permettent à la plate-forme d'être raccordée à une surface adjacente.

42. Appareil selon la revendication 37, la plate-forme pouvant se déplacer au-delà de l'extrémité des moyens de guidage prévus sur le cadre, du fait que les moyens de guidage sur la plate-forme ont une longueur destinée à permettre à ceux-ci de se déployer au-delà des moyens de guidage sur le cadre, alors qu'une portion des moyens de guidage se trouve dans une position guidée.

43. Appareil selon la revendication 1, les parois latérales et/ou le toit du cadre étant abrités sous une enceinte afin de procurer une protection contre des conditions météorologiques inclémentes.

44. Procédé destiné à procurer un appareil de moyens de levage (10 ; 310) pour être utilisé en conjonction avec une première aire de stockage de marchandises de véhicule (2 ; 102 ; 410), et une deuxième aire de stockage de marchandises se présentant sous la forme d'un entrepôt (16 ; 20 ; 118 ; 216 ; 332 ; 412), et pour assurer le mouvement de marchandises entre celles-ci, lesdits moyens de levage incorporant un cadre (30 ; 130 ; 340 ; 402), une plate-forme (24 ; 124 ; 224 ; 334 ; 404) apte à être déplacée le long d'un axe vertical par rapport audit cadre, ledit cadre étant muni d'une base destinée à être montée sur une surface de support (32 ; 330) à l'emplacement d'utilisation et positionnée entre l'entrepôt d'un premier côté et l'emplacement pour l'aire de stockage de marchandises de véhicule sur un côté opposé, **caractérisé en ce que** le cadre se présente sous la forme d'un module corps et d'un module toit, lesdits modules étant assemblés dans des conditions d'usine avec la plate-forme et les moyens d'entraînement et livrés en vue d'une utilisation in-situ, et raccordés de façon à constituer l'appareil de levage.

45. Procédé selon la revendication 44, le procédé englobant les étapes consistant à s'assurer que la plate-forme est apte à être déplacée entre les niveaux des planchers dans l'entrepôt et/ou dans les aires de stockage de marchandises de véhicule lesquelles sont amenées en position par rapport à l'appareil de moyens de levage.

46. Procédé selon la revendication 44, les faces du cadre qui ne sont pas positionnées de façon adjacente à l'entrepôt ou aux ouvertures d'aires de stockage de marchandises de véhicule étant équipées d'un écran ou d'une barrière.
